# EUROPÄISCHE PATENTSCHRIFT

(11) **EP 2 655 003 B1**
(45) Veröffentlichungstag und Bekanntmachung des Hinweises auf die Patenterteilung: **21.01.2015**
(21) Anmeldenummer: 12715307.0
(22) Anmeldetag: 28.03.2012
(51) Int. Cl.: B23K 9/32

(54) **DRAHTEINLAUFDÜSE**
WIRE INSERTION PIECE
PIÈCE D'INSERTION DE FIL

(30) Priorität: 12.04.2011 AT 5192011
(43) Veröffentlichungstag der Anmeldung: 30.10.2013
(73) Patentinhaber: Fronius International GmbH, 4643 Pettenbach (AT)
(72) Erfinder: FÜRLINGER, Johannes, A-4621 Sipbachzell (AT); OBERNDORFER, Klaus, A-4655 Vorchdorf (AT); PLATZER, Stefan, A-4643 Pettenbach (AT)
(74) Vertreter: Sonn & Partner Patentanwälte
(86) Internationale Anmeldenummer: PCT/AT2012/000081
(87) Internationale Veröffentlichungsnummer: WO 2012/139144

(56) Entgegenhaltungen:
- DE-A1- 2 617 072
- GB-A- 1 513 907

## Beschreibung

Die Erfindung betrifft eine Drahteinlaufdüse zur Befestigung in einer Kupplung eines Schlauchpakets, mit einem Drahteinlaufelement und einem Befestigungsmittel für eine Drahtseele zur Führung eines Schweißdrahts, wobei zwischen Drahteinlaufelement und Befestigungsmittel ein Grundkörper, und im Drahteinlaufelement ein Hohlraum ausgebildet ist, in welchem zumindest ein Dichtungselement mit einer axialen Öffnung für die Führung des Schweißdrahts angeordnet ist.

Allgemein wird eine Drahteinlaufdüse dazu verwendet, einen Schweißdraht in ein mit einem Schweißbrenner verbundenes Schlauchpaket einzuführen. Durch das Schlauchpaket werden weiters ein Schutzgas, ein Schweißstrom, Steuerleitungen und Kühlmittel zum Schweißbrenner geführt. Das Schutzgas muss dabei spätestens an der Schweißstelle den Schweißdraht einhüllen, sodass die erforderliche Qualität der Schweißnaht erzielt wird. Häufig wird das Schutzgas bereits im Bereich der Drahteinlaufdüse einer sogenannten Drahtseele, in welcher der Schweißdraht geführt ist, zugeführt. Das Schutzgas wird unter einem gewissen Druck zugeführt, sodass die erforderliche Menge pro Zeiteinheit erreicht werden kann. Entsprechend sollte das Schutzgas ausschließlich in Richtung Schweißbrenner strömen. In der Praxis ist es jedoch im Wesentlichen unvermeidlich, dass das Schutzgas auch aus der Drahteinlaufdüse austritt und ein Teil des Schutzgases in die falsche Richtung strömt.

Eine Drahteinlaufdüse der gegenständlichen Art ist beispielsweise in der DE 26 170 72 A1 geoffenbart.

Die GB 1 513 907 A betrifft eine Drahteinlaufdüse zur Befestigung in einer Kupplung eines Schlauchpakets beim Lichtbogenschweißen, wobei an einer Seite des Drahteinlaufelements ein offener Hohlraum gebildet ist, in welchem ein Dichtungselement in Form einer Kautschukhülse eingepresst wird.

Die Aufgabe der Erfindung besteht darin, einen Austritt des Schutzgases in der Drahteinlaufdüse in entgegengesetzter Hauptförderrichtung des Schweißdrahts zu verhindern.

Die Aufgabe der Erfindung wird durch eine oben genannte Drahteinlaufdüse gelöst, bei der der Grundkörper einen ersten Teil des Drahteinlaufelements bildet, und ein zweiter Teil des Drahteinlaufelements mit dem ersten Teil lösbar verbindbar ist, wobei der Hohlraum im Drahteinlaufelement auf den ersten Teil und den zweiten Teil aufgeteilt ist, wobei der Schweißdraht im Zentrum des Hohlraums durch die axiale Öffnung des Dichtungselements geführt ist, und der Durchmesser des Hohlraums größer als der Außendurchmesser des Dichtungselements und das Dichtungselement kürzer als der Hohlraum, ausgebildet ist, sodass zwischen Dichtungselement und Hohlraum ein Freiraum gebildet wird und das Dichtungselement im Hohlraum sowohl radial als auch axial beweglich ist, und der Grundkörper als Trennebene zur unabhängigen Befestigung von Drahtseele und Dichtungselement ausgebildet ist. Dadurch, dass der Hohlraum des Drahteinlaufelements auf den ersten Teil und den zweiten Teil aufgeteilt ist, kann das Dichtungselement platzsparend in der Drahteinlaufdüse integriert werden, ohne deren äußere Form zu verändern. Dadurch, dass vor der Drahtseele, welche mit dem Befestigungsmittel befestigt wird, das Dichtungselement angeordnet ist, wird ein dichter Einlauf des Schweißdrahts gewährleistet. Somit wird in vorteilhafter Weise verhindert, dass Schutzgas aus dem Befestigungsmittel in das Drahteinlaufelement strömt. Die Dichtheit der Drahteinlaufdüse ist dabei unabhängig von der verwendeten Drahtseele, sodass auch unisolierte Drahtseelen als Meterware eingesetzt werden können. Ebenso wird der Verbrauch an Schutzgas reduziert und eine Beimischung von Umgebungsluft verhindert, wodurch die äußeren Einflüsse auf das Schweißresultat reduziert werden können. Durch die Ausbildung des Grundkörpers als Trennebene kann eine unabhängige Befestigung von Dichtungselement und Drahtseele erzielt und die Dichtheit erhöht werden, da der Übergang vom Dichtelement auf die Drahtseele über im Wesentlichen plane Flächen in der Trennebene erfolgt. Dadurch, dass der Schweißdraht im Zentrum des Hohlraums geführt ist und der Durchmesser des Hohlraums größer als der Außendurchmesser des Dichtungselements ausgebildet ist, können Schwingungen des Schweißdrahts ausgeglichen werden, ohne dass das Dichtungselement dadurch einem erhöhten Verschleiß unterliegt. Somit wird die Lebensdauer des Dichtungselements verlängert und die Dichtheit über die Lebensdauer konstant aufrecht erhalten.

Um eine entsprechende Dichtheit erzielen zu können, ist der Durchmesser der Öffnung des Dichtungselements im Wesentlichen gleich dem Durchmesser des Schweißdrahts ausgebildet.

Vorteilhafterweise ist im Freiraum zwischen Dichtungselement und Hohlraum ein Ausgleichselement angeordnet. Dadurch wird das Dichtungselement im Wesentlichen zentriert im Hohlraum gehalten, wobei ein Ausgleich der Schwingungen des Schweißdrahts uneingeschränkt möglich ist.

In der axialen Öffnung des Dichtungselements kann zumindest eine axiale Nut angeordnet sein, wodurch eine optimale Dichtheit in der axialen Öffnung bei gleichzeitiger minimaler Reibung des Schweißdrahts erzielt werden kann. Durch die zumindest eine Nut wird also die Reibfläche des Schweißdrahts in der axialen Öffnung reduziert, und zugleich Raum für Ablagerungen geschaffen und gleichzeitig der Schweißdraht abgedichtet. Somit ist die Dichtheit im Wesentlichen unabhängig von der Fördergeschwindigkeit bzw. der Leistung des Fördermotors.

Das Dichtungselement ist vorzugsweise aus elastischem Kunststoff, insbesondere PAI (Polyamidimide) oder PET (Polyethylenterephthalat) gebildet.

Das Ausgleichselement ist vorzugsweise aus einem gegenüber dem Dichtungselement elastischeren Kunststoff, insbesondere einem elastischen Schaumstoff wie z.B. Moosgummi, gebildet.

Wenn im Bereich der Trennebene in Richtung des Befestigungselements ein Dichtring angeordnet ist, kann eine dichte Befestigung der Drahteinlaufdüse erzielt werden, sodass kein Schutzgas in einer der Förderrichtung des Schweißdrahts entgegengesetzter Richtung austreten kann.

Die vorliegende Erfindung wird anhand der beigefügten, schematischen Zeichnungen näher erläutert. Darin zeigen:
- Fig. 1: eine schematische Darstellung eines Schweißgerätes;
- Fig. 2: ein schematisches Schnittbild einer Drahteinlaufdüse;
- Fig. 3: eine schematische Draufsicht auf die Drahteinlaufdüse;
- Fig. 4: eine schematische Draufsicht auf einen Stromdorn einer Kupplung;
- Fig. 5: ein schematisches Schnittbild des Stromdorns gemäß Fig. 4;
- Fig. 6: ein schematisches Schnittbild des Stromdorns gemäß Fig. 5 entlang der Schnittlinie VI-VI;
- Fig. 7: eine schematische Explosionsdarstellung eines Befestigungssystems;
- Fig. 8: ein schematisches Schnittbild des Befestigungssystems gemäß Fig. 7 in zusammengestecktem Zustand;
- Fig. 9: ein schematisches Schnittbild des Befestigungssystems in zusammengestecktem, verdrehtem und fixiertem Zustand;
- Fig. 10: ein schematisches Schnittbild einer erfindungsgemäßen Drahteinlaufdüse in getrenntem Zustand;
- Fig. 11: eine schematische Explosionsdarstellung der Drahteinlaufdüse gemäß Fig. 10;
- Fig. 12: ein schematisches Schnittbild der im Stromdorn eingebauten erfindungsgemäßen Drahteinlaufdüse gemäß Fig. 10; und
- Fig. 13: eine schematische Vorderansicht auf ein erfindungsgemäßes Dichtungselement.

Einführend wird festgehalten, dass gleiche Teile des Ausführungsbeispiels mit gleichen Bezugszeichen versehen werden. Die in der gesamten Beschreibung enthaltenen Offenbarungen kann sinngemäß auf gleiche Teile mit gleichen Bezugszeichen übertragen werden. Weiters können auch Einzelmerkmale aus den dargestellten Ausführungsbeispielen eigenständige, erfindungsgemäße Lösungen darstellen.

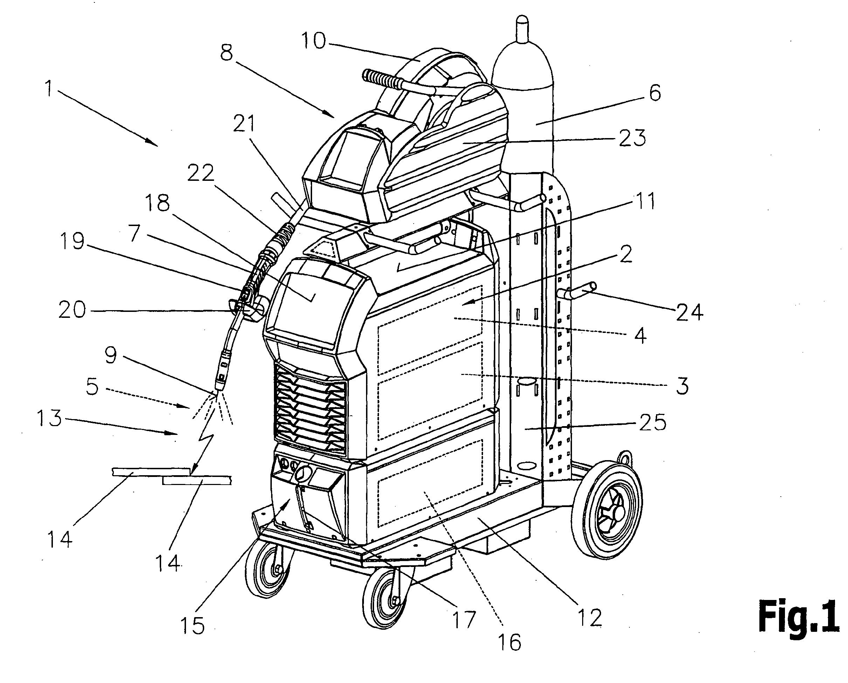

In Fig. 1 ist ein Schweißgerät 1 bzw. eine Schweißanlage für verschiedenste Prozesse bzw. Verfahren, wie z.B. MIG/MAG-, WIG/TIG-, Elektroden-, Doppeldraht/Tandem-Schweißverfahren, Plasma- oder Lötverfahren usw., gezeigt.

Das Schweißgerät 1 umfasst eine Stromquelle 2 mit einem darin angeordneten Leistungsteil 3, einer Steuervorrichtung 4 und weiteren nicht dargestellten Komponenten und Leitungen, wie beispielsweise einem Umschaltglied, Steuerventile, usw.. Die Steuervorrichtung 4 ist beispielsweise mit einem Steuerventil verbunden, welches in einer Versorgungsleitung für ein Gas 5, insbesondere ein Schutzgas, wie beispielsweise CO₂, Helium oder Argon und dergl., zwischen einem Gasspeicher 6 und einem Schweißbrenner 7 bzw. einem Brenner angeordnet ist.

Zudem kann über die Steuervorrichtung 4 noch ein Drahtvorschubgerät 8, welches für das MIG/MAG-Schweißen üblich ist, angesteuert werden, wobei über eine Versorgungsleitung ein Zusatzwerkstoff bzw. ein Schweißdraht 9 von einer Vorratstrommel 10 bzw. einer Drahtrolle in den Bereich des Schweißbrenners 7 zugeführt wird. Selbstverständlich ist es möglich, dass das Drahtvorschubgerät 8, wie es aus dem Stand der Technik bekannt ist, im Schweißgerät 1, insbesondere im Gehäuse 11 der Stromquelle 2, integriert ist und nicht, wie in Fig. 1 dargestellt, als Zusatzgerät auf einem Fahrwagen 12 positioniert ist. Das Drahtvorschubgerät 8 kann auch direkt auf das Schweißgerät 2 aufgesetzt werden, wobei das Gehäuse 11 der Stromquelle 2 an der Oberseite zur Aufnahme des Drahtvorschubgerätes 8 ausgebildet ist, und der Fahrwagen 12 entfallen kann.

Der Schweißdraht 9 bzw. der Zusatzwerkstoff kann vom Drahtvorschubgerät 8 auch außerhalb des Schweißbrenners 7 an die Prozessstelle zugeführt werden, wobei im Schweißbrenner 7 bevorzugt eine nicht abschmelzende Elektrode angeordnet ist, wie dies beim WIG/TIG-Schweißen üblich ist.

Der Strom zum Aufbauen eines Lichtbogens 13, insbesondere eines Arbeitslichtbogens, zwischen der Elektrode bzw. dem Schweißdraht 9 und einem aus einem oder mehreren Teilen gebildeten Werkstück 14 wird über eine Schweißleitung (nicht dargestellt) vom Leistungsteil 3 der Stromquelle 2, dem Schweißbrenner 7, insbesondere der Elektrode bzw. dem Schweißdraht 9, zugeführt. Das zu verschweißende Werkstück 14 wird über eine weitere Schweißleitung (nicht dargestellt) für das weitere Potential, insbesondere ein Masse-Kabel, mit der Stromquelle 2 verbunden, wodurch über den Lichtbogen 13 bzw. einem gebildeten Plasmastrahl ein Stromkreis für einen Prozess aufgebaut werden kann. Bei Verwendung eines Brenners mit internem Lichtbogen 13 ((nicht dargestellt) wie dies bei einem Plasma-Brenner der Fall sein kann) werden die beiden Schweißleitungen zum Brenner geführt, sodass im Brenner ein entsprechender Stromkreis aufgebaut werden kann (nicht dargestellt).

Zum Kühlen des Schweißbrenners 7 wird dieser über ein Kühlgerät 15 unter Zwischenschaltung ev. Komponenten, wie beispielsweise einen Strömungswächter, mit einem Flüssigkeitsbehälter, insbesondere einem Wasserbehälter 16 mit einer Füllstandsanzeige 17, verbunden. Bei Inbetriebnahme des Schweißbrenners 7 wird das Kühlgerät 15, insbesondere eine für die im Wasserbehälter 16 angeordnete Flüssigkeit verwendete Flüssigkeitspumpe, gestartet, wodurch eine Kühlung des Schweißbrenners 7 bewirkt wird. Wie bei dem dargestellten Ausführungsbeispiel gezeigt, wird das Kühlgerät 15 auf den Fahrwagen 12 positioniert, auf das anschließend die Stromquelle 2 gestellt wird. Die einzelnen Komponenten der Schweißanlage, also die Stromquelle 2, das Drahtvorschubgerät 8 und das Kühlgerät 15, sind dabei derart ausgebildet, dass diese entsprechende Vorsprünge bzw. Ausnehmungen aufweisen, sodass sie sicher aufeinander gestapelt bzw. aufeinander gestellt werden können.

Das Schweißgerät 1, insbesondere die Stromquelle 2, weist weiters eine Ein- und/oder Ausgabevorrichtung 18 auf, über welche die unterschiedlichsten Schweißparameter, Betriebsarten oder Schweißprogramme des Schweißgerätes 1 eingestellt bzw. aufgerufen und angezeigt werden können. Die über die Ein- und/oder Ausgabevorrichtung 18 eingestellten Schweißparameter, Betriebsarten oder Schweißprogramme werden an die Steuervorrichtung 4 weitergeleitet und von dieser anschließend die einzelnen Komponenten des Schweißgerätes 1 angesteuert bzw. entsprechende Sollwerte für die Regelung oder Steuerung vorgegeben. Bei Verwendung eines entsprechenden Schweißbrenners 7 können auch Einstellvorgänge über den Schweißbrenner 7 vorgenommen werden, wozu der Schweißbrenner 7 mit einer Schweißbrenner-Ein- und/oder Ausgabevorrichtung 19 ausgestattet ist. Bevorzugt ist dabei der Schweißbrenner 7 über einen Datenbus, insbesondere einen seriellen Datenbus, mit dem Schweißgerät 1, insbesondere der Stromquelle 2 oder dem Drahtvorschubgerät 8 verbunden. Zum Starten des Schweißprozesses weist der Schweißbrenner 7 meist einen Startschalter (nicht dargestellt) auf, durch dessen Betätigung der Lichtbogen 13 gezündet werden kann. Um gegen die vom Lichtbogen 13 ausgehende Hitzestrahlung geschützt zu werden, kann der Schweißbrenner 7 mit einem Hitzeschutzschild 20 ausgestattet werden.

Beim dargestellten Ausführungsbeispiel ist der Schweißbrenner 7 über ein Schlauchpaket 21 mit dem Schweißgerät 1 verbunden, wobei das Schlauchpaket 21 über einem Knickschutz 22 am Schweißbrenner 7 befestigt sein kann. Im Schlauchpaket 21 sind die einzelnen Leitungen, wie beispielsweise die Versorgungsleitung, Leitungen für den Schweißdraht 9, das Gas 5, den Kühlkreislauf, die Datenübertragung, usw., vom Schweißgerät 1 zum Schweißbrenner 7 angeordnet, wogegen das Masse-Kabel bevorzugt gesondert an der Stromquelle 2 angeschlossen wird. Das Schlauchpaket 21 wird vorzugsweise über eine nicht dargestellte Kupplungsvorrichtung an der Stromquelle 2 oder dem Drahtvorschubgerät 8 angeschlossen, wogegen die einzelnen Leitungen im Schlauchpaket 21 mit einem Knickschutz am bzw. im Schweißbrenner 7 befestigt sind. Damit eine entsprechende Zugentlastung des Schlauchpakets 21 gewährleistet ist, kann das Schlauchpaket 21 über eine Zugentlastungsvorrichtung mit dem Gehäuse 11 der Stromquelle 2 oder dem Drahtvorschubgerät 8 verbunden sein (nicht dargestellt).

Grundsätzlich müssen für die unterschiedlichen Schweißverfahren bzw. Schweißgeräte 1, wie beispielsweise WIG-Geräte oder MIG/MAG-Geräte oder Plasmageräte, nicht alle zuvor benannten Komponenten verwendet bzw. eingesetzt werden. Der Schweißbrenner 7 kann auch als luftgekühlter Schweißbrenner 7 ausgeführt werden und das Kühlgerät 15 entfallen. Das Schweißgerät 1 wird zumindest durch die Stromquelle 2, das Drahtvorschubgerät 8 und allenfalls das Kühlgerät 15 gebildet, wobei diese Komponenten auch in einem gemeinsamen Gehäuse 11 angeordnet sein können. Es können noch weitere Teile bzw. Komponenten, wie beispielsweise ein Schleifschutz 23 am Drahtvorschubgerät 8 oder ein Optionsträger 24 an einer Haltevorrichtung 25 für den Gasspeicher 6, usw. angeordnet werden.

Des Weiteren ist es bekannt, dass der Schweißdraht 9 in einer Drahtseele 26 bzw. Schweißdrahtseele 26 im Schlauchpaket 21 zum Schweißbrenner 7 geführt wird. Der Übergang des Schweißdrahts 9 von der Vorschubeinheit des Drahtvorschubgeräts 8 in die Drahtseele 26 erfolgt über eine sogenannte Drahteinlaufdüse 27, welche im Wesentlichen im Zentrum eine durchgehende Öffnung 28 für den Schweißdraht 9 aufweist. Die Drahteinlaufdüse 27 wird bevorzugt in eine Kupplung 29 des Schlauchpakets 21 eingeschraubt, wodurch gleichzeitig die Drahtseele 26 fixiert wird. Für diese Fixierung ist es allerdings erforderlich, vorher an der Drahtseele 26 ein Befestigungsstück, beispielsweise durch Pressen zu fixieren. Dieses Befestigungsstück vergrößert dementsprechend den Durchmesser der Drahtseele 26, sodass diese nicht mehr verrutschen kann und fixiert ist.

Erfindungsgemäß ist nun eine Befestigung ohne Befestigungsstück vorgesehen, sodass eine werkzeuglose Befestigung der Drahtseele 26 möglich ist, wobei die Drahtseele 26 in die Drahteinlaufdüse 27 gesteckt wird und gleichzeitig, mit der Befestigung der Drahteinlaufdüse 27 auch die Drahtseele 26 in der Drahteinlaufdüse 27 geklemmt und fixiert wird.

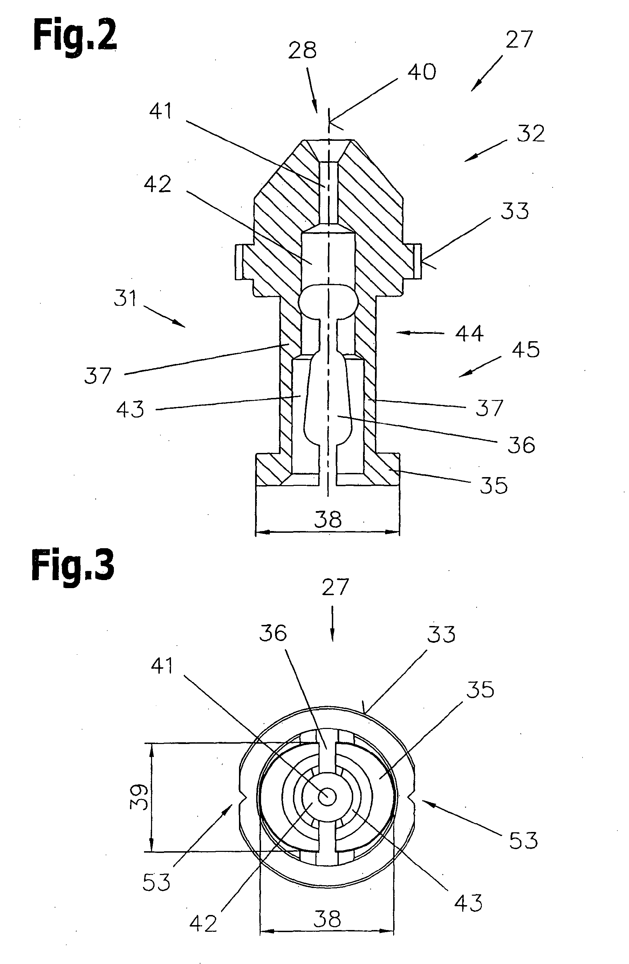

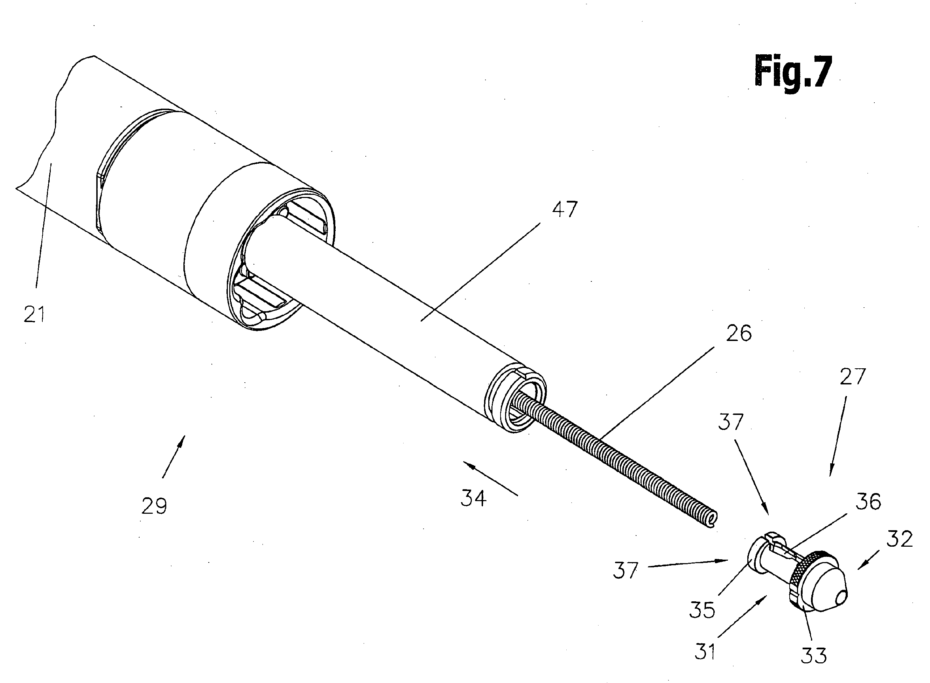

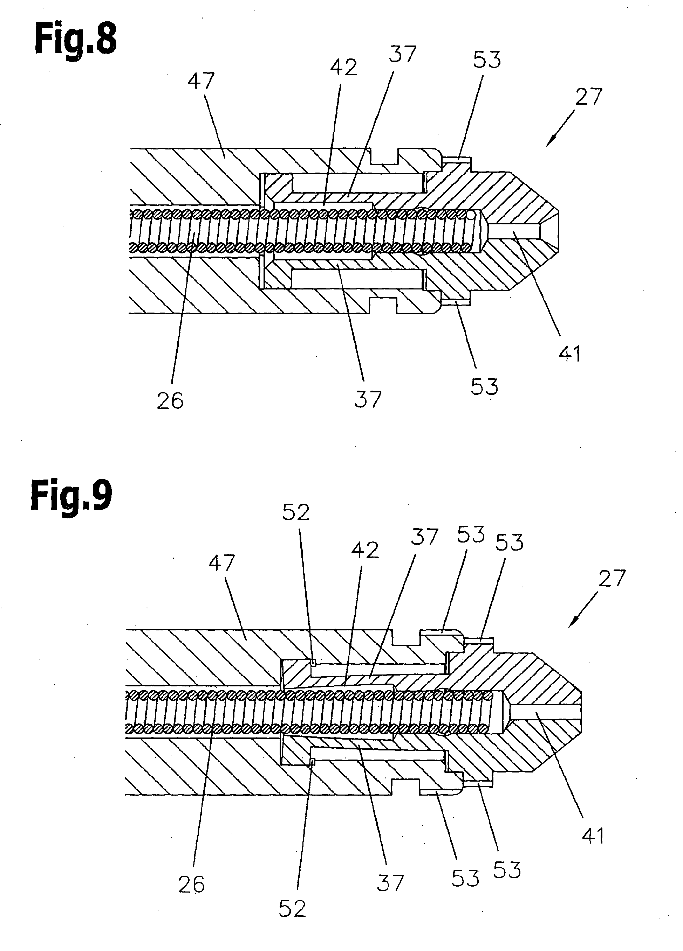

Im Detail wird dies im Folgenden anhand der Figuren 2 bis 9 beschrieben.

Für die gleichzeitige Befestigung von Drahtseele 26 und Drahteinlaufdüse 27 ist die Drahteinlaufdüse 27 als ein Teil des Befestigungssystems speziell ausgebildet. Insbesondere ist ein Abschnitt der Drahteinlaufdüse 27 als Befestigungsmittel 31 ausgebildet, wobei der Abschnitt des Drahteinlaufelements 32 und der Abschnitt des Anschlags 33 darauf angepasst sind. Sowohl das Drahteinlaufelement 32 als auch der Anschlag 33 sind grundsätzlich bekannt. In Förderrichtung 34 bzw. Hauptförderrichtung des Schweißdrahts 9 gesehen, stellt das Drahteinlaufelement 32 den ersten Abschnitt, der Anschlag 33 den zweiten Abschnitt und das Befestigungsmittel 31 den dritten Abschnitt dar.

Das Befestigungsmittel 31 ist zylinderförmig ausgebildet, wobei an jenem Ende, welches dem Drahteinlaufelement 32 gegenüberliegt, ein ovaler (bzw. elliptischer) Steg 35 angeordnet ist. Des Weiteren wird das Befestigungsmittel 31 durch, zumindest einen Schlitz 36 in zumindest zwei Teile unterteilt. Im Fall eines Schlitzes 36 entstehen zwei Backen 37, welche dem Befestigungselement 31 eine entsprechende Verformbarkeit verleihen. Der Schlitz 36 erstreckt sich auch über den ovalen Steg 35, welcher ebenso in zwei Hälften unterteilt wird. Das Befestigungsmittel 31 wird quasi in der Mitte durchschnitten, sodass die zwei beweglichen Backen 37 entstehen.

Die Länge der Hauptachse 38 des ovalen Stegs 35 ist größer als der Durchmesser des zylinderförmig ausgebildeten Teils des Befestigungsmittels 31. Bevorzugt ist aber auch die Länge der Nebenachse 39 größer als der Durchmesser des zylinderförmigen Teils. Demzufolge steht also der ovale Steg 35 über den zylinderförmigen Teil des Befestigungsmittels 31 hervor. Die Länge der Hauptachse 38 des ovalen Stegs 35 ist kleiner als der Durchmesser des Anschlags 33 der Drahteinlaufdüse 27. Dadurch kann das Befestigungsmittel 31 bis zum Anschlag 33 von der Kupplung 29 des Schlauchpakets 21 aufgenommen werden. Das Befestigungsmittel 31 ist im zusammengebauten Zustand nicht sichtbar, da es somit im Inneren der Kupplung 29 angeordnet ist.

Um die Mittelachse 40 der Drahteinlaufdüse 27 sind drei konzentrische Bohrungen angeordnet, wobei die erste Bohrung 41 im Drahteinlaufelement 32 angeordnet ist und an den Durchmesser des Schweißdrahts 9 angepasst ist, die zweite Bohrung 42 an den Durchmesser der Drahtseele 26 angepasst ist und die dritte Bohrung 43 größer als der Durchmesser der Drahtseele 26 ausgebildet ist. Die dritte Bohrung 43 ist im Bereich des Befestigungsmittels 31 und die zweite Bohrung 42 im Bereich des Anschlags 33 angeordnet. Durch die zweite Bohrung 42 wird ein Pressbereich 44 für die Drahtseele 26 realisiert. Der Bereich des Befestigungsmittels 31 um die dritte Bohrung 43 ist als Federbereich 45 ausgebildet. Der Pressbereich 44 ist im Wesentlichen im Übergangsbereich zwischen der dritten Bohrung 43 und der zweiten Bohrung 42 ausgebildet, also am Ende des Federbereichs 45. Somit sind im Befestigungselement 31 sowohl der Pressbereich 44 als auch der Federbereich 45 angeordnet. Der Schlitz 36 ist vor und nach dem Pressbereich 44 vergrößert ausgebildet, sodass ein definierter Pressbereich 44 gebildet wird. In diesem Pressbereich 44 wird also die Drahtseele 26 geklemmt und fixiert, indem der Pressbereich 44 verengt wird. Die Kraft zum Klemmen der Drahtseele 26 im Pressbereich 44 wird gemäß dem Hebelgesetz über die Länge des Federbereichs 45 bestimmt. Da der ovale Steg 35 am Anfang des Federbereichs 45 angeordnet ist und gegenüber dem zylinderförmigen Bereich hervorstehend ausgebildet ist, werden die Backen 37 über diesen ovalen Steg 35 entsprechend zusammengedrückt. Die Klemmung der Drahtseele 26 im Pressbereich 44 kann somit mit geringem Kraftaufwand am Anfang des Federbereichs 45 durchgeführt werden. Zusätzlich kann die Kraft auch durch die Ausführung der Schlitze 36 - wie die Vergrößerung vor und nach dem Pressbereich 44 - beeinflusst werden, da dadurch die zu bewegende Materialmenge beeinflussbar ist.

Zur Befestigung der Drahtseele 26 wird diese durch die dritte Bohrung 43 der Drahteinlaufdüse 27 geführt und in die zweite Bohrung 42 eingesteckt. Anschließend kann das Befestigungsmittel 31 mit der darin befindlichen Drahtseele 26 in eine Ausnehmung 46 der Kupplung 29 des Schlauchpaktes 21 als ein weiterer Teil des Befestigungssystems eingeführt werden. Somit befindet sich die Drahtseele 26 im Pressbereich 44 der Drahteinlaufdüse 27, wobei dieser noch nicht verengt ist und entsprechend die Drahtseele 26 noch nicht geklemmt ist. Beispielsweise kann die Ausnehmung 46 stirnseitig und zentrisch an einem Stromdorn 47 der Kupplung 29 angeordnet sein, sodass die Drahtseele 26 im Zentrum des Stromdorns 47 positioniert werden kann. Die Ausnehmung 46 ist in einem ersten Teilabschnitt 48 korrespondierend zum ovalen Steg 35 entsprechend oval ausgeführt. Dementsprechend hat auch der erste Teilabschnitt 48 der Ausnehmung 46 eine Hauptachse und eine Nebenachse, welche im Wesentlichen der Hauptachse 38 und der Nebenachse 39 des ovalen Stegs 35 entsprechen. Dadurch kann die Position für das Einführen des Befestigungsmittels 31 bis zum Anschlag 33 definiert werden. Der erste Teilabschnitt 48 der Ausnehmung 46 weist eine Länge bzw. Tiefe auf, welche im Wesentlichen dem zylindrischen Bereich des Befestigungsmittels 31 bzw. der Länge zwischen dem Anschlag 33 und dem ovalen Steg 35 entspricht. Anschließend an den ovalen Teilabschnitt 48 ist die Ausnehmung 46 im zweiten Teilabschnitt 49 nahezu rund ausgeführt, entsprechend der Höhe des ovalen Stegs 35. Dementsprechend kann die Drahteinlaufdüse 27 verdreht werden, sobald der Anschlag 33 am Stromdorn 47 anliegt. Vorteilhafterweise ist die Stirnseite des Anschlags 33 gerippt oder geriffelt ausgeführt, sodass der Benutzer oder Schweißer die Drahteinlaufdüse 27 werkzeuglos mit den Fingern verdrehen und dadurch die Drahtseele 26 und die Drahteinlaufdüse 27 fixieren kann. Der Anschlag 33 ist also als Fixierelement der Drahteinlaufdüse 27 ausgebildet.

Eine Verdrehung der Drahteinlaufdüse 27 ist also nur möglich, wenn sich der ovale Steg 35 unterhalb des ovalen Teilabschnitts 48 der Ausnehmung 46 befindet. Damit bei der Verdrehung die Backen 37 zusammengedrückt werden, ist der zweite Teilabschnitt 49 entsprechend oval bzw. elliptisch ausgebildet, wobei lediglich ein minimaler Unterschied zwischen der Länge der Hauptachse 50 und der Länge der Nebenachse 51 besteht. Der zweite Teilabschnitt 49 ist also nahezu rund ausgebildet. Die Länge der Hauptachse des ersten Teilabschnitts 48 ist gleich der Länge der Hauptachse 50. Wenn die Drahteinlaufdüse 27 verdreht wird, wird die Hauptachse 38 des ovalen Stegs 35 auf die Nebenachse 51 im zweiten Teilabschnitt 49 der Ausnehmung 46 gedreht und die Backen 37 um die Längendifferenz zwischen der Hauptachse 50 und der Nebenachse 51 zusammengedrückt, wodurch der Pressbereich 44 entsprechend verengt und die Drahtseele 26 geklemmt wird.

Die Fixierung der Drahteinlaufdüse 27 erfolgt dadurch, dass der gegenüber dem zylindrischen Bereich des Befestigungsmittels 31 erhöht ausgebildete ovale Steg 35 im Bereich der Hauptachse 50 zumindest teilweise hinter den ovalen Teilabschnitt 48 der Ausnehmung 46, also fluchtend zur Nebenachse 51 des ovalen Teilabschnitts 48 der Ausnehmung 46, verdreht wird. Dies resultiert daraus, dass der zweite Teilabschnitt 49 der Ausnehmung 46 nahezu rund ausgebildet ist. Dementsprechend ist die Länge fluchtend zur Nebenachse 51 des ovalen Teilabschnitts 48 der Ausnehmung 46 größer als die Länge der Nebenachse 51. Somit kann der ovale Steg 35 hinter den ovalen Teilabschnitt 48 der Ausnehmung 46 verdreht werden und die Drahteinlaufdüse 27 nicht aus dem Stromdorn 47 gezogen werden.

Fluchtend zur Nebenachse 51 des ovalen Bereichs der Ausnehmung 46 ist der nahezu runde zweite Teilabschnitt 49 der Ausnehmung 46 mit Ausbuchtungen 52 versehen, sodass die Klemmung der Drahtseele 26 geringfügig gelockert wird, und die Backen 37 wieder geringfügig auseinander gehen. Dadurch wird für den Benutzer eine Einrastung spürbar und zusätzlich eine Sicherung der Fixierung der Drahteinlaufdüse 27 erzielt, da vor einer Verdrehung der Drahteinlaufdüse 27 die Backen 37 geringfügig zusammengedrückt werden müssen, also ein gewisser Kraftaufwand erforderlich ist. Somit wird eine unbeabsichtigte Verdrehung im Wesentlichen ausgeschlossen.

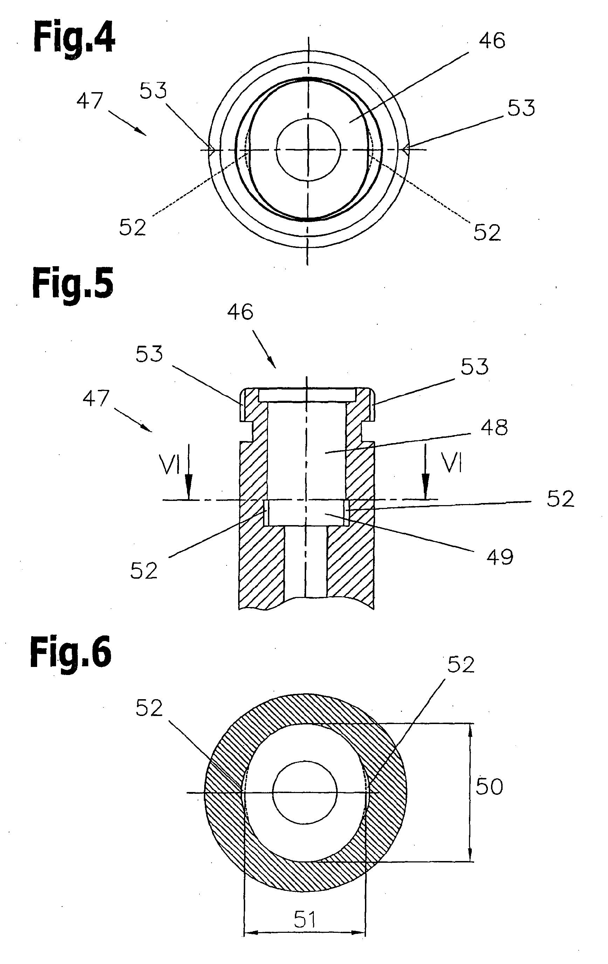

Bevorzugt kann die zusammengedrückte Stellung bzw. die fixierte Drahtseele 26 durch zumindest zwei gegenüberliegende Kerben 53 in der Stirnseite des Anschlags 33 und im Stromdorn 47 gekennzeichnet werden. Fluchten die Kerben 53 des Anschlags 33 und des Stromdorns 47, ist die Drahtseele 26 fixiert. Die fluchtenden Kerben 53 dienen zur Markierung einer ordnungsgemäßen Fixierung für den Benutzer. Die Kerben 53 befinden sich also an der Stirnseite entlang der Hauptachse 38 des ovalen Stegs 35 der Drahteinlaufdüse 27 und an der Nebenachse 51 des zweiten Teilabschnitts 49 der Ausnehmung 46 des Stromdorns 47 (siehe Fig. 3 und 4). Die Kerben 53 an der Drahteinlaufdüse 27 sind also normal zum Schlitz 36 und die Kerben 53 am Stromdorn 47 in der Flucht des Schlitzes 36 angeordnet, solange die Drahteinlaufdüse 27 nicht verdreht wurde.

Dadurch, dass der zweite Teilabschnitt 49 der Ausnehmung 46 des Stromdorns 47 nahezu rund ausgebildet ist, kann die Drahtseele 26 durch Verdrehung in beliebiger Richtung fixiert werden. Grundsätzlich wird die Drahtseele 26 durch eine Viertel-Drehung der Drahteinlaufdüse 27 fixiert bzw. gelöst.

Das Befestigungsmittel 31 kann in der Öffnung zur Aufnahme der Drahtseele 26 auch Rillen, ein Gewinde oder Ähnliches aufweisen, durch welche die Klemmung der Drahtseele 26 verbessert werden kann. Bevorzugt wird eine solche Modifikation bei weicheren Materialien der Drahtseele 26 vorgenommen werden.

Somit können die Drahtseele 26 und Drahteinlaufdüse 27 gleichzeitig ohne Werkzeug und schnell befestigt werden, wobei an der Drahtseele 26 keine zusätzlichen Elemente befestigt werden müssen. Somit können in einfacher Weise sogenannte Endlosdrahtseelen verwendet werden, die auf die entsprechende Länge gekürzt werden. Die Drahtseele 26 kann von einer beliebigen Seite montiert werden, also bevorzugt von einer beliebigen Seite durch das Schlauchpaket 21 geschoben werden, da keine zusätzlichen Elemente an der Drahtseele befestigt sind. Auch wird die Drahtseele 26 bei der Fixierung im Wesentlichen nicht verdreht. Ebenso ist von Vorteil, dass das Befestigungssystem unabhängig vom Material (Stahl, Kunststoff, usw.) der Drahtseele 26 ist.

Erfindungsgemäß ist nun vorgesehen, dass der Anschlag 33 der Drahteinlaufdüse 27 als starrer Grundkörper ausgebildet ist und einen ersten Teil 54 des Drahteinlaufelements 32 bildet, und ein zweiter Teil 55 des Drahteinlaufelements 32 mit dem ersten Teil 54 lösbar verbindbar ist. Im Drahteinlaufelement 32 ist ein Hohlraum 56 ausgebildet, in welchem ein Dichtungselement 57 angeordnet ist.

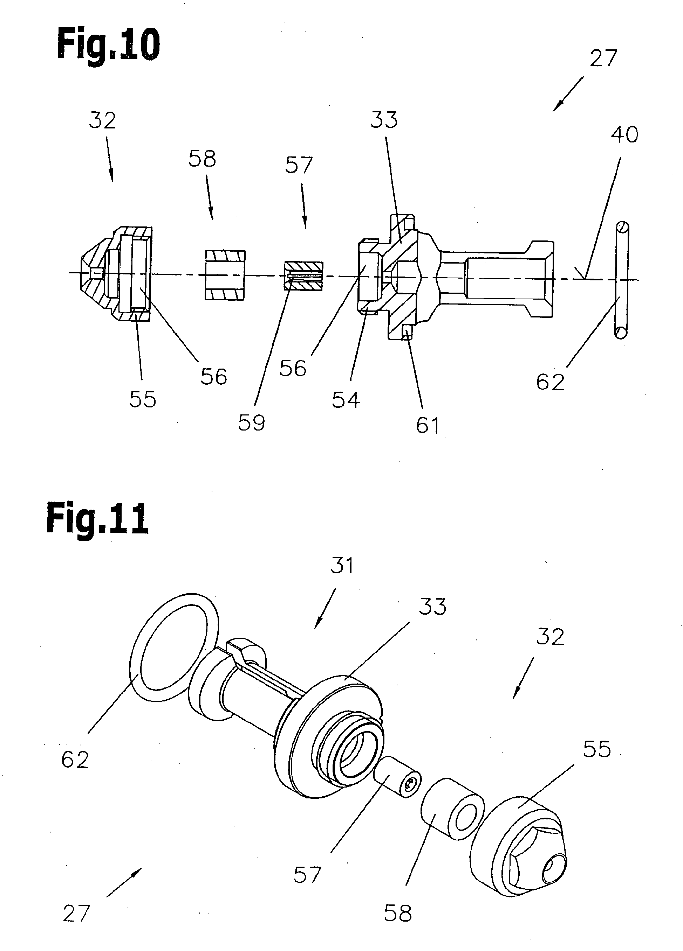

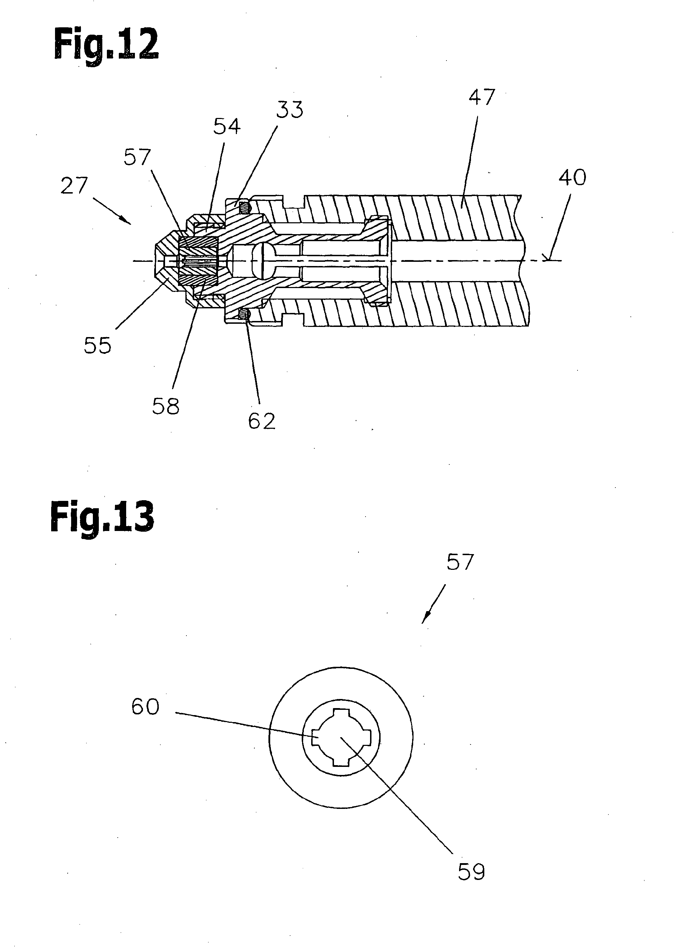

Im Detail ist die Erfindung im Folgenden anhand der Fig. 10 bis 13 beschrieben.

Der Hohlraum 56 kann sowohl auf den ersten Teil 54 als auch auf den zweiten Teil 55 aufgeteilt sein und ist vorzugsweise zylinderförmig ausgebildet. Entsprechend ist der Hohlraum 56 im Zentrum, also zentrisch um die Mittelachse 40 der Drahteinlaufdüse 27 angeordnet. Der Durchmesser des Hohlraums 56 ist dabei größer als der Außendurchmesser des zylinderförmig ausgebildeten Dichtungselements 57, sodass ein Kreisring-förmiger Freiraum um das Dichtungselement 57 entsteht. Die Länge des Dichtungselements 57 ist dabei an die Länge des Hohlraums 56 angepasst. Entsprechend ist das Dichtungselement 57 minimal kürzer als der Hohlraum 56, sodass das Dichtungselement 57 im Hohlraum 56 sowohl radial als auch axial beweglich ist und sich somit an eine sogenannte Dressur des Schweißdrahts 9 anpasst. Dazu ist das Dichtungselement 57 aus einem Material wie PAI-(Polyamidimide), PET-(Polyethylenterephthalat) oder ähnlichen elastischen Kunststoffen gefertigt.

Die Bewegungen des Dichtungselements 57 können durch ein Ausgleichselement 58, welches im Freiraum angeordnet ist und das Dichtungselement 57 entsprechend umschließt, begrenzt werden. Das Ausgleichselement 58 ermöglicht eine sogenannte schwimmende Lagerung des Dichtungselements 57, indem das Ausgleichselement 58 radiale Bewegungen des Dichtungselements 57 aufnimmt, indem es zusammengedrückt wird. Somit werden die Schwingungen des durch das Dichtungselement 57 geförderten Schweißdrahts 9 gedämpft, wodurch die Dichtheit uneingeschränkt aufrechterhalten werden kann. Ein geeignetes Material für das Ausgleichselement 58 ist elastischer Schaumstoff, wie beispielsweise Moosgummi.

Das Ausgleichselement 58 und das Dichtungselement 57 weisen vorzugsweise dieselbe Länge auf.

Die Befestigung von Dichtungselement 57 und Ausgleichselement 58 erfolgt über den zweiten Teil 55 des Drahteinlaufelements 32, indem dieses beispielsweise durch eine Schraubverbindung am ersten Teil 54 des Grundkörpers befestigt wird. Dabei muss die Schraubverbindung entsprechend bis zu einem Anschlag 33 - also bis an eine Stirnfläche des Grundkörpers - geschraubt werden, sodass der Hohlraum 56 eine definierte Höhe aufweist und das Dichtungselement 57 im Hohlraum 56 beweglich ist.

Wenn der erste Teil 54 am zweiten Teil 55 befestigt ist, wird der auf beide Teile 54, 55 aufgeteilte Hohlraum geschlossen. Es kann beispielsweise das Dichtungselement 57 und das Ausgleichselement 58 im Wesentlichen bis zur Hälfte in den ersten Teil 54 gesteckt werden und anschließend der zweite Teil 55 auf den ersten Teil 54 geschraubt werden. Dementsprechend wird die zweite Hälfte des Dichtungselements 57 und des Ausgleichselements 58 vom zweiten Teil 55 aufgenommen.

Anschließend kann die Drahteinlaufdüse 27 im Stromdorn 47 fixiert werden, wobei auch die Drahtseele 26 entsprechend fixiert wird. Die Befestigung von Dichtungselement 57 und Ausgleichselement 58 ist also unabhängig von der Befestigung der Drahtseele 26, da die Befestigung des Dichtungselements 57 und Ausgleichselements 58 im Wesentlichen vor dem Grundkörper erfolgt und die Befestigung der Drahtseele 26 im Wesentlichen nach dem Grundkörper. Der starre Grundkörper hat demnach die Funktion einer Trennebene.

In diesem Zustand wird der Schweißdraht 9 in die Drahteinlaufdüse 27 eingeführt, wobei dieser zuerst im Dichtungselement 57, dann durch den Grundkörper und anschließend durch die Drahtseele 26 geführt wird. Dies entspricht auch der Hauptförderrichtung des Schweißdrahts 9. Bei bestimmten Schweißprozessen mit Kurzschlüssen, wie dem CMT-(Cold Metal Transfer)-Schweißprozess, kann der Schweißdraht 9 auch zurück - also in die entgegengesetzte Richtung der Hauptförderrichtung - gefördert werden.

Das für den Schweißprozess erforderliche Schutzgas 5 wird im Bereich des Befestigungsmittels 31 und/oder nach dem Bereich des Befestigungsmittels 31 der Drahtseele 26 zugeführt, wobei ein Austritt des Schutzgases 5 in Richtung Drahteinlaufelement 32 durch die erfindungsgemäße Lösung verhindert wird.

Dies wird dadurch möglich, dass eine Öffnung 59 des Dichtungselements 57 an den Durchmesser des Schweißdrahts 9 angepasst ist, sodass dieser während der Förderung kontinuierlich vom Dichtungselement 57 umschlossen ist.

Um die Reibung in der Öffnung 59 des Dichtungselements 57 zu reduzieren, wird zumindest eine axiale Nut 60, bevorzugt vier Nuten 60, im Dichtungselement 57 integriert. Diese zumindest eine Nut 60 weist beispielsweise eine Breite von 1 mm auf. Dadurch wird die Reibfläche für den Schweißdraht 9 in der Öffnung 59 reduziert und eine Klemmung des Schweißdrahts 9 verhindert.

Der bei der Förderung des Schweißdrahts 9 entstehende Abrieb, kann in den Nuten 60 des Dichtungselements 57 abgelagert werden, wobei die Ablagerungen auch entsprechend abdichten. Gegebenenfalls kann das Dichtungselement 57 routinemäßig mit der Drahtseele 26 gewechselt werden, um zu verhindern, dass die Nuten 60 vollständig mit Ablagerungen verlegt werden.

Eine weitere Abdichtung kann in der Trennebene zwischen Drahteinlaufdüse 27 und Stromdorn 47 erfolgen, sodass auch diese Übergangsstelle dicht ausgebildet wird. Dazu weist die Trennebene auf der Seite des Befestigungsmittels 31 eine radiale Ausnehmung 61 auf, welche zur Aufnahme eines Dichtrings 62 ausgebildet ist. Dieser Dichtring 62 wird bei der Befestigung der Drahteinlaufdüse 27 auf eine Stirnfläche des Stromdorns 47 gedrückt, sodass ein Gasaustritt verhindert wird.

## Patentansprüche

1. Drahteinlaufdüse (27) zur Befestigung in einer Kupplung (29) eines Schlauchpakets (21), mit einem Drahteinlaufelement (32) und einem Befestigungsmittel (31) für eine Drahtseele (26) zur Führung eines Schweißdrahts (9), wobei zwischen Drahteinlaufelement (32) und Befestigungsmittel (31) ein Grundkörper, und im Drahteinlaufelement (32) ein Hohlraum (56) ausgebildet ist, in welchem zumindest ein Dichtungselement (57) mit einer axialen Öffnung (59) für die Führung des Schweißdrahts (9) angeordnet ist, **dadurch gekennzeichnet, dass** der Grundkörper einen ersten Teil (54) des Drahteinlaufelements (32) bildet, und ein zweiter Teil (55) des Drahteinlaufelements (32) mit dem ersten Teil (54) lösbar verbindbar ist, wobei der Hohlraum (56) im Drahteinlaufelement (32) auf den ersten Teil (54) und den zweiten Teil (55) aufgeteilt ist, wobei der Schweißdraht (9) im Zentrum des Hohlraums (56) durch die axiale Öffnung (59) des Dichtungselements (57) geführt ist, und der Durchmesser des Hohlraums (56) größer als der Außendurchmesser des Dichtungselements (57) und das Dichtungselement (57) kürzer als der Hohlraum (56), ausgebildet ist, sodass zwischen Dichtungselement (57) und Hohlraum (56) ein Freiraum gebildet wird und das Dichtungselement (57) im Hohlraum (56) sowohl radial als auch axial beweglich ist, und der Grundkörper als Trennebene zur unabhängigen Befestigung von Drahtseele (26) und Dichtungselement (57) ausgebildet ist.

2. Drahteinlaufdüse (27) nach Anspruch 1, **dadurch gekennzeichnet, dass** der Durchmesser der axialen Öffnung (59) im Wesentlichen dem Durchmesser des Schweißdrahts (9) entspricht.

3. Drahteinlaufdüse (27) nach Anspruch 1 oder 2, **dadurch gekennzeichnet, dass** im Freiraum zwischen Dichtungselement (57) und Hohlraum (56) ein Ausgleichselement (58) angeordnet ist.

4. Drahteinlaufdüse (27) nach einem der Ansprüche 1 bis 3, **dadurch gekennzeichnet, dass** in der axialen Öffnung (59) des Dichtungselements (57) zumindest eine axiale Nut (60) angeordnet ist.

5. Drahteinlaufdüse (27) nach einem der Ansprüche 1 bis 4, **dadurch gekennzeichnet, dass** das Dichtungselement (57) aus elastischem Kunststoff, insbesondere PAI (Polyamidimide) oder PET (Polyethylenterephthalat) gebildet ist.

6. Drahteinlaufdüse (27) nach einem der Ansprüche 3 bis 5, **dadurch gekennzeichnet, dass** das Ausgleichselement (58) aus einem gegenüber dem Dichtungselement elastischeren Kunststoff, insbesondere einem elastischen Schaumstoff, gebildet ist.

7. Drahteinlaufdüse (27) nach einem der Ansprüche 1 bis 6, **dadurch gekennzeichnet, dass** im Bereich der Trennebene in Richtung des Befestigungselements (31) ein Dichtring (62) angeordnet ist.

## Claims

1. A wire inlet nozzle (27) for fastening in a coupling (29) of a hose package (21), comprising a wire inlet element (32) and a fastening means (31) for a wire core (26) for guiding a welding wire (9), wherein a main body is formed between the wire inlet element (32) and the fastening means (31) and a cavity (56) is formed in the wire inlet element (32), in which cavity at least one sealing element (57) having an axial opening (59) for guiding the welding wire (9) is arranged, **characterised in that** the main body forms a first part (54) of the wire inlet element (32), and a second part (55) of the wire inlet element (32) is detachably connectable to the first part (54), wherein the cavity (56) in the wire inlet element (32) is split between the first part (54) and the second part (55), wherein the welding wire (9) is led in the centre of the cavity (56) through the axial opening (59) of the sealing element (57) and the diameter of the cavity (56) is larger than the outside diameter of the sealing element (57) and the sealing element (57) is designed shorter than than the cavity (56), so a free space is created between the sealing element (57) and the cavity (56), and the sealing element (57) is movable radially as well as axially in the cavity (56), and the main body is designed as a separating plane for independently fastening the wire core (26) and the sealing element (57).

2. The wire inlet nozzle (27) according to claim 1, **characterised in that** the diameter of the axial opening (59) is substantially equal to the diameter of the welding wire (9).

3. The wire inlet nozzle (27) according to claim 1 or 2, **characterised in that** a compensating element (58) is arranged in the free space between the sealing element (57) and the cavity (56).

4. The wire inlet nozzle (27) according to any one of claims 1 to 3, **characterised in that** at least one axial groove (60) is arranged in the axial opening (59) of the sealing element (57).

5. The wire inlet nozzle (27) according to any one of claims 1 to 4, **characterised in that** the sealing element (57) is made of a resilient plastic, in particular PAI (polyamidimide) or PET (polyethylene terephthalate).

6. The wire inlet nozzle (27) according to any one of claims 3 to 5, **characterised in that** the compensating element (58) is made of a plastic more resilient than that of the sealing element, in particular a resilient foam.

7. The wire inlet nozzle (27) according to any one of claims 1 to 6, **characterised in that** a sealing ring (62) is arranged in the region of the separating plane in the direction of the fastening means (31).

## Revendications

1. Buse d'entrée de fil (27) destinée à être fixée dans un accouplement (29) d'un ensemble de tuyaux (21), avec un élément d'entrée de fil (32) et un moyen de fixation (31) pour une âme de fil (26) pour le guidage d'un fil de soudure (9), entre l'élément d'entrée de fil (32) et le moyen de fixation (31), un corps de base et, dans l'élément d'entrée de fil (32), un espace creux (56) étant formés, dans lequel au moins un élément d'étanchéité (57) avec une ouverture axiale (59) est disposé pour le guidage du fil de soudure (9), **caractérisée en ce que** le corps de base forme une première partie (54) de l'élément d'entrée de fil (32) et une deuxième partie (55) de l'élément d'entrée de fil (32) peut être reliée de manière amovible avec la première partie (54), l'espace creux (56) dans l'élément d'entrée de fil (32) étant divisé dans la première partie (54) et la deuxième partie (55), le fil de soudure (9) étant guidé au centre de l'espace creux (56) à travers l'ouverture axiale (59) de l'élément d'étanchéité (57), et le diamètre de l'espace creux (56) est supérieur au diamètre extérieur de l'élément d'étanchéité (57) et l'élément d'étanchéité (57) est plus court que l'espace creux (56), de façon à ce que, entre l'élément d'étanchéité (57) et l'espace creux (56), un espace libre est formé et l'élément d'étanchéité (57) est mobile dans l'espace creux (56) aussi bien radialement qu'axialement, et le corps de base est conçu comme un plan de séparation par rapport à la fixation indépendante de l'âme du fil (26) et de l'élément d'étanchéité (57).

2. Buse d'entrée de fil (27) selon la revendication 1, **caractérisée en ce que** le diamètre de l'ouverture axiale (59) correspond sensiblement au diamètre du fil de soudure (9).

3. Buse d'entrée de fil (27) selon la revendication 1 ou 2, **caractérisée en ce que**, dans l'espace libre entre l'élément d'étanchéité (57) et l'espace creux (56) se trouve un élément de compensation (58).

4. Buse d'entrée de fil (27) selon l'une des revendications 1 à 3, **caractérisée en ce que**, dans l'ouverture axiale (59) de l'élément d'étanchéité (57), se trouve au moins une rainure axiale (60).

5. Buse d'entrée de fil (27) selon l'une des revendications 1 à 4, **caractérisée en ce que** l'élément d'étanchéité (57) est constitué d'une matière plastique élastique, plus particulièrement du PAI (polyamidimide) ou du PET (polyéthylène téréphthalate).

6. Buse d'entrée de fil (27) selon l'une des revendications 3 à 5, **caractérisée en ce que** l'élément de compensation (58) est constitué d'une matière plastique plus élastique que l'élément d'étanchéité, plus particulièrement une mousse élastique.

7. Buse d'entrée de fil (27) selon l'une des revendications 1 à 6, **caractérisée en ce que**, au niveau du plan de séparation, en direction de l'élément de fixation (31), se trouve une bague d'étanchéité (62).
